# EUROPEAN PATENT APPLICATION

(11) **EP 3 396 195 A1**
(43) Date of publication of application: **31.10.2018**
(21) Application number: 17168590.2
(22) Date of filing: 28.04.2017
(51) Int. Cl.: F16F 1/12, F16F 7/116

(54) **TUNABLE MASS DAMPER AND MOUNTING COMPONENT**

(71) Applicant: Winterthur Gas & Diesel Ltd., 8401 Winterthur (CH)
(72) Inventor: Secall Wimmel, Thomas, 5507 Mellingen (CH); Jean-Noël, Constantin, 8406 Winterthur (CH); Fliegans, René, 8523 Hagenbuch (CH)
(74) Representative: Hepp Wenger Ryffel AG

(57) **Abstract**

The invention is directed to a tunable mass damper (100) for damping vibrations The tunable mass damper (100) comprises a mass block (2) for providing an inertial mass and at least one guiding element (3) for guiding the movement of the mass block (2) along an acting direction (A). The tunable mass damper (100) comprises at least one force transmitting element (6) which is arranged transversely to the acting direction (A). The mass block (2) is moveable in the acting direction (A) and connected to the force transmitting element (6) by connection means (21, 22). The force transmitting element (6) is pretensioned by at least one spring element (4) wherein the pretension is adjustable.

## Description

The invention is directed to a tunable mass damper and a mounting component according to the preamble of the independent claims.

Mass dampers are used to reduce the amplitude of mechanic vibrations. Tuned mass dampers are mass dampers, which are explicitly dimensioned for a specific application, e.g. for a specific use and thus only work properly at a single frequency.

Attempts have been made to provide tuned mass dampers which can be subsequently adjusted after they are mounted to a specific component.

Such a device is disclosed in US 6,681,908 B2. This patent discloses an adjustable tuned mass damper with a mass which is supported on a coil spring. The natural resonant frequency of the system can be adjusted with a screw, which has to be screwed into the coil spring. The screw grabs one or more coils of the spring and therefore changes the stiffness of the spring.

There are several drawbacks in the prior art. The effective distance which can be used for oscillating of the mass is reduced the more the screw is screwed into the coil spring. Furthermore, the properties of the coil spring are different if the spring is stretched or compressed relative to its unloaded state. The spring force is proportionally dependent on the position of the mass. Little adjustments of the screw result in big changes of the natural frequency of the tuned mass damper of US 6,681,908 B2. Furthermore, in the range around the neutral position/unloaded state of the spring, there is no force or only little force acting on the mass. Thus, for low amplitudes there is only a little damping effect.

It is the aim of the invention to avoid at least some of the drawbacks of the prior art, in particular, to provide an adjustable mass damper which is easy to adjust, less sensitive on adjustments and which has good damping capabilities for low amplitudes.

At least some of said objects are accomplished by a tunable mass damper and/or a mounting component according to the independent claims.

In particular, a tunable mass damper according to the invention for damping vibrations comprises a mass block for providing an inertial mass and at least one guiding element for guiding the movement of the mass block along an acting direction. The tunable mass damper comprises at least one force transmitting element, for example a rope or a chain or lever, in particular a metal rope or wire rope, for transmitting a force. The force is preferably transmitted by a pulling action. Said force transmitting element is transversely arranged to the acting direction. The mass block is moveable in the acting direction and connected to the force transmission element by connecting means. The force transmitting element is pretensioned by at least one spring element. Said pretension is adjustable.

Hence, even in an initial positon, the mass can be pretensioned and thus, a damping effect is derivable for small amplitudes.

Typically, the tunable mass damper according to the invention is predimensioned. The natural frequency of a mounting component which oscillation should be damped can be determined theoretically, for example, with a FEM-analysis or another adequate calculation method. Furthermore, the maximal amplitude of the oscillation can be estimated. Based on this calculated values, the tunable mass damper can be dimensioned. Namely, the mass of the mass block and the initial pretension of the force transmitting element can be determined. The tunable mass damper can be manufactured accordingly. The pretension of the force transmitting element is adjustable and the fine tuning of the damper is possible on site. Typically, the theoretically calculated values do not fit perfectly to real values. The discrepancy of the calculated value and the real value can thus be eliminated by adjusting the pretension of the force transmitting element.

The mass block and the guiding element are preferably arranged in a housing. A housing may be any kind of closed box, frame or just a mounting plate. Preferably, the housing has at least a base plate, two, preferably four sidewalls and optionally a top plate.

The tunable mass damper can be provided as a single unit. Mounting components for diesel engines of a vessel, for example a service stair or an exhaust manifold or fuel pump or a turbocharger or a platform or a rail unit can be retrofitted. Furthermore, such a tuned mass damper can be replaced easily. A closed housing also provides protection against dirt.

The guiding element can comprise at least one and preferably two guide rails.

Guide rails provide a stable and reliable guiding of the mass block. If two guide rails are used, forces can be easily transmitted and torque of the mass block can be absorbed.

The tunable mass damper may comprise two force transmitting elements, in particular, two ropes.

The pretension and/or the spring force can thus be distributed to more elements. Furthermore, each force transmitting element can be dimensioned smaller.

The spring element may comprise at least one elastic element. The elastic element may be a rubber spring or a disc spring. Preferably, the elastic element comprises at least one, and more preferably two coil springs. The coil springs can be tension springs or pull springs.

Such elastic elements can be bought as standard parts. Maintenance and replacement of the parts can be simplified.

The tunable mass damper may comprise an adjusting element for adjusting the pretension of the force transmission element. Said adjusting element is preferably an adjusting screw.

The pretension can thus be adjusted in a simple manner.

The mass block of the tunable mass damper can be connected to the at least one force transmitting element through at least one, preferably a pair of connecting rollers. Rollers as herein used can be understood as pulleys. The pair of connecting rollers is mounted on or linked to the mass block and is movable together with the mass block.

A relative movement, at least in one direction, between a working point at the connecting means of the force transmitting element and the mass block is enabled. Undesired forces, in particular lateral forces, can be reduced or avoided and the force of the pretension can be directed to the mass block without resistance.

The at least one force transmitting element can be guided by two guiding rollers, preferably, by at least two pairs of guiding rollers. The guiding rollers can be mounted on the housing. Each pair of guiding rollers provides a working point at the connection point to the force transmitting element.

Hence, at least a part of each force transmitting element is arranged in a fixed relative position to the housing and to the mass block, at least in one direction. In at least a second direction, a relative movement of at least part of each force transmitting element is enabled. The working point of each force transmitting element remains unchanged.

The tunable mass damper may comprise a damping element, in particular a friction damper or a viscous damper.

A damping element induces a damping force into the mass block, whose direction is opposite to the direction of the relative motion of the block with respect to the guide rails and housing. The consequence is the dissipation of the systems kinetic energy.

The damping element is preferably arranged between the mass block and the housing and/or between the mass block and the guiding element.

The damping force can thus be directed to a desired location, i.e. the housing and/or the guiding element.

Preferably, the mass block is arranged centrally in the housing.

A balanced mass distribution and an easy manufacturing are enabled.

The spring element and/or the adjusting element may be attached to the housing.

No separate elements are necessary for attaching the spring elements to the tunable mass damper. The tunable mass damper can thus be manufactured as a single unit and provided to a mounting site in a preset configuration.

The spring element of the tunable mass damper may comprise two elastic elements which are arranged on opposite sides of the housing. Preferably, the connection means, preferably a pair of guiding rollers, of the mass block is attached to the force transmitting element in between those opposite sides.

A balanced force introduction can be derived. Splitting the spring element into several distinctly arranged elastic elements enable to introduce the force at distinct points on the housing and thus, the housing can be dimensioned smaller.

Another or an additional aspect of the invention concerns a mounting component, in particular a mounting component of a diesel engine. The mounting component can be e.g. a service stair, an exhaust manifold, a fuel pump, a turbocharger, a platform or a rail unit. The mounting component comprises a tunable mass damper as herein described.

Such mounting components enable the retrofitting e.g. of a vessel, or the replacing of complete units. Furthermore, they can be pretuned for a specific natural frequency.

An exemplary embodiment of a tunable mass damper is explained with respect to the following figure.

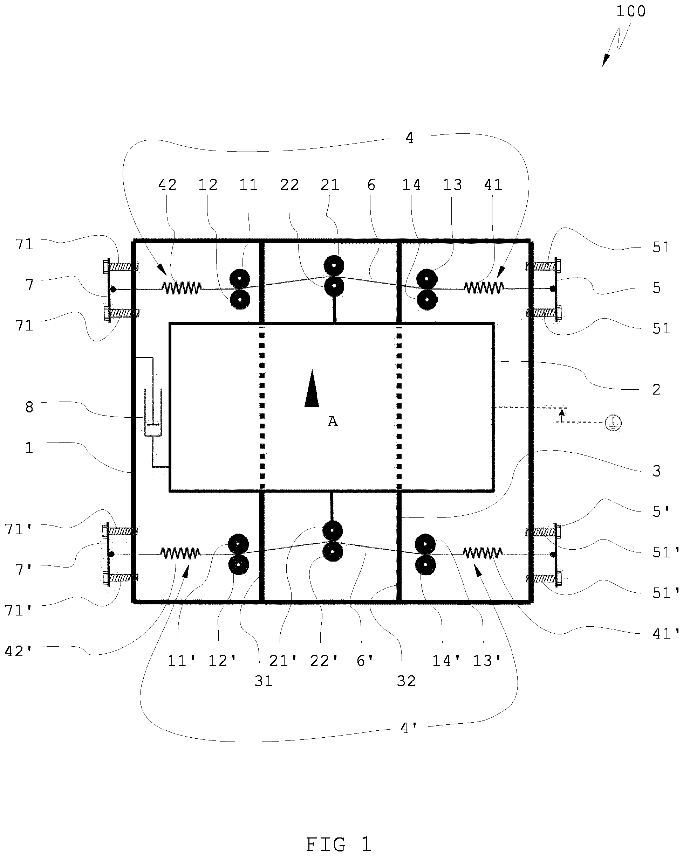

- Figure 1:: A schematic representation of an inventive tunable mass damper

Figure 1 shows tunable mass damper 100 in a schematic manner. The tunable mass damper 100 comprises a housing 1. Inside the housing 1, a mass block 2 is arranged. The mass block 2 is guided by two guide rails 31 and 32 of a guiding element 3. The guide rails 31 and 32 are mounted on the housing 1. The housing 1 may comprise, besides the four side walls as shown in the figure, a top plate and a base plate so as to provide a closed, preferably sealed housing 1.

The action direction A is depicted by an arrow. The arrow indicates a front and a back. A first pair of connection rollers 21, 22 and a second pair of connecting rollers 21', 22' are provided on the front, respectively on the back of the mass block 2.

Four pairs of guiding rollers 11, 12; 13, 14; 11', 12'; 13', 14' are provided inside the housing 1 and are mounted on the housing 1.

A metal rope 6 is provided as a first force transmitting element. The metal rope 6 is led through the roller pairs 11, 12; 21, 22 and 13, 14 and is arranged transversely to the acting direction A. The metal rope 6 is provided with a spring element 4. The spring element 4 is divided into two parts and comprises two coil springs 41, 42. Each of them is arranged on an end of the metal rope 6'. Each of the coil springs 41, 42 is connected to a separate adjusting element 5, 7. The adjusting elements 5 and 7 each comprise two adjusting screws 51 and 71. By way of turning the adjusting screws 51, 71, the metal rope 6 can be pretensioned such that the damping frequency is adjusted.

A metal rope 6' is provided as a second force transmitting element. The metal rope 6' is led through the roller pairs 11', 12'; 21', 22' and 13', 14' and is arranged transversely to the acting direction A. The metal rope 6' is provided with a spring element 4'. The spring element 4 is divided into two parts and comprises two coil springs 41', 42'. Each of them is arranged on an end of the metal rope 6'. Each of the coil springs 41', 42' is connected to a separate adjusting element 5, 7. The adjusting elements 5' and 7' comprise each two adjusting screws 51' and 71'. By way of turning the adjusting screws 51', 71', the metal rope 6' can be pretensioned.

Depending on the desired characteristic of the tunable mass damper, only one of the two force transmitting elements or more than two force transmitting elements may be used.

An additional damping element 8 is arranged inside the housing 1 and connects the mass block 2 to the housing 1.

## Claims

1. A tunable mass damper (100) for damping vibrations comprising
a mass block (2) for providing an inertial mass
at least one guiding element (3) for guiding the movement of the mass block (2) along an acting direction (A)
at least one force transmitting element (6), preferably a rope or a chain or a lever, in particular a metal rope or wire rope, for transmitting a force
said force transmitting element (6) being arranged transversely to the acting direction (A)
wherein the mass block (2) is moveable in the acting direction (A) and connected to the force transmitting element (6) by connection means (21, 22) and the force transmitting element (6) is pretensioned by at least one spring element (4) wherein the pretension is adjustable.

2. The tunable mass damper (100) according to claim 1, **characterized in that** the mass block (2) and the guiding element (3) are arranged in a housing (1).

3. The tunable mass damper (100) according to claim 1 or 2 wherein the guiding element (3) comprises at least one and preferably two guide rails (31; 32).

4. The tunable mass damper (100) according to one of claims 1 to 3, comprising two force transmitting elements (6; 6'), in particular two ropes.

5. The tunable mass damper (100) according one of claims 1 to 4, wherein the spring element (4) comprises at least one elastic element, in particular a coil spring (41), preferably two coil springs (41; 42).

6. The tunable mass damper (100) according to one of claims 1 to 5 comprising an adjusting element (5; 5') for adjusting the pretension of the force transmitting element (6; 6'), said adjusting element (5; 5') being preferably an adjusting screw (51).

7. The tunable mass damper (100) according to one of claims 1 to 6 wherein the mass block (2) is connected to the at least one force transmitting element (6) through a pair of connecting rollers (21; 22), said pair of connecting rollers (21; 22) being mounted on or fixed to the mass block (2).

8. The tunable mass damper (100) according to one of claims 2 to 7 wherein the at least one force transmitting element (6; 6') is guided by two pairs of guiding rollers (11, 12; 13, 14), said two pairs of guiding rollers (11, 12; 13, 14) being mounted on the housing (1).

9. The tunable mass damper (100) according to one of claims 1 to 8 comprising a damping element (8), in particular a friction damper and/or a viscous damper.

10. The tunable mass damper (100) according to claim 2 and claim 9, wherein the damping element (8) is arranged between the mass block (2) and the housing (1) and/or between the mass block (2) and the guiding element (3).

11. The tunable mass damper (100) according to one of claims 1 to 10, **characterized in that** the mass block (2) is centrally arranged in the housing (1).

12. The tunable mass damper (100) according to one of claims 2 to 11, **characterized in that** the spring element (4) is attached to the housing.

13. The tunable mass damper according to one of claims 2 to 12 and claim 6, **characterized in that** the adjusting element (5) is attached to the housing (1).

14. The tunable mass damper (100) according to one of claims 2 to 13 and claim 6, **characterized in that** two elastic elements (41; 42) are arranged on opposite sides of the housing (1).

15. Mounting component, in particular a service stair or an exhaust manifold or fuel pump or a turbocharger or a platform or a rail unit, in particular of a diesel engine, comprising a tuned mass damper (100) according to one of claims 1 to 14.
